(19) Europäisches Patentamt
European Patent Office
Office européen des brevets

(11) **EP 4 746 281 A1**

(12) **EUROPEAN PATENT APPLICATION**

(43) Date of publication:
**20.05.2026 Bulletin 2026/21**

(21) Application number: **24213412.0**

(22) Date of filing: **15.11.2024**

(51) International Patent Classification (IPC):
**H02P 6/08** *(2016.01)* **H02M 1/34** *(2007.01)*
**H02M 7/5387** *(2007.01)* **H02P 29/02** *(2016.01)*
**H02P 101/45** *(2016.01)*

(52) Cooperative Patent Classification (CPC):
**H02P 6/085; H02M 1/346; H02M 7/5387;**
H02P 29/02; H02P 29/028; H02P 2101/45

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Volvo Car Corporation
405 31 Göteborg (SE)**

(72) Inventors:
• **FORSSELL, Jonas
40531 Göteborg (SE)**
• **EKSTRÖM, Markus
40531 Göteborg (SE)**

(74) Representative: **Kransell & Wennborg KB
P.O. Box 2096
403 12 Göteborg (SE)**

(54) **METHOD FOR CONTROLLING A CONVERTER UNIT FOR AN ELECTRIC MACHINE OF A VEHICLE, DATA PROCESSING APPARATUS, COMPUTER PROGRAM, COMPUTER-READABLE STORAGE MEDIUM, CONVERTER UNIT FOR AN ELECTRIC MACHINE OF A VEHICLE, DRIVE ASSEMBLY FOR A VEHICLE, AND VEHICLE**

(57) The disclosure relates to a method for controlling a converter unit (18) for an electric machine (20) of a vehicle. The converter unit (18) comprises an electric power source interface (24), an electric machine interface (26), at least one H-bridge (28) and at least one snubber capacitor (46). The H-bridge (28) and the at least one snubber capacitor (46) are electrically interposed between the electric power source interface (24) and the electric machine interface (26). A switch (SW1, SW2, SW3, SW4) is provided on each leg of the H-bridge (28). The method comprises causing closure of a pair of switches (SW1, SW2, SW3, SW4) for supplying electric current to the electric machine interface (26) during a first predefined time span. The method further comprises causing closure of the pair of switches (SW1, SW2, SW3, SW4) for supplying an electric induction current to the electric machine interface (26) during a second predefined time span and after a predefined waiting time. The first predefined time span and the second predefined time span are associated with the same electric current supply half cycle. Moreover, the disclosure is directed to a data processing apparatus (32), to a computer program (40) and to a computer-readable storage medium (38).

Fig. 2

EP 4 746 281 A1

# Description

## TECHNICAL FIELD

The present disclosure relates to a method for controlling a converter unit for an electric machine of a vehicle. The converter unit comprises an H-bridge, wherein a switch is provided on each leg of the H-bridge.

Moreover, the present disclosure relates to a data processing apparatus, to a computer program and to a computer-readable storage medium for executing such a method.

Furthermore, the present disclosure is directed to a converter unit for an electric machine of a vehicle, to a drive assembly for a vehicle comprising the converter unit, and to a vehicle comprising the drive assembly.

## BACKGROUND ART

Converter units for electric machines of vehicles convert direct current (DC), which is provided by a power source of the vehicle, e.g. a traction battery, into alternating current (AC), which is provided to the electric machine. Using the converter unit, the phase and amplitude of the alternating current may be adapted such that the electric machine may be operated at a certain rotational speed and/or provide a certain torque. Sometimes, such converter units are also called inverter units.

In order to do so, the converter unit may comprise one or more H-bridges with a switch being provided on each leg of the H-bridge. The actual conversion of direct current into alternating current is achieved by operating these switches in a concerted manner. It is known that each operation of a switch causes so-called switching losses.

## SUMMARY

Hence, there may be a need to enhance the energy efficiency of such converter units. In other words, there may be a need to reduce the switching losses.

The problem is at least partially solved or alleviated by the subject matter of the independent claims of the present disclosure, wherein further examples are incorporated in the dependent claims.

According to a first aspect, there is provided a method for controlling a converter unit for an electric machine of a vehicle. The converter unit comprises an electric power source interface, an electric machine interface, at least one H-bridge and at least one snubber capacitor. The H-bridge and the at least one snubber capacitor are electrically interposed between the electric power source interface and the electric machine interface. A switch is provided on each leg of the H-bridge. The method comprises:

- causing closure of a pair of switches for supplying electric current to the electric machine interface during a first predefined time span, and
- causing closure of the pair of switches for supplying an electric induction current to the electric machine interface during a second predefined time span and after a predefined waiting time,

wherein the first predefined time span and the second predefined time span are associated with the same electric current supply half cycle.

The electric power source interface is connectable to an electric power source of the vehicle. The electric power source may be a traction battery of the vehicle. The electric machine interface is connectable to an electric machine of the vehicle. The electric machine of the vehicle may be a machine that is drivingly connected to at least one road wheel of the vehicle. Hence, the electric machine may be used for driving the vehicle. The at least one snubber capacitor is electrically connected in parallel to the at least one H-bridge. Electric energy from the electric power source provided to the converter unit via the electric power source interface may be converted from DC into AC by alternatingly opening and closing pairs of switches of the at least one H-bridge. The AC may be provided to the electric machine of the vehicle via the electric machine interface of the converter unit. During the first predefined time span, a pair of switches, which may also be referred to as first pair of switches, is closed for supplying electric current to the electric machine interface. Thus, electric current may be supplied to the electric machine connectable to the electric machine interface. After the first predefined time span, the first pair of switches is opened in order to interrupt the supply of electric current to the electric machine interface. From this point onwards, magnetic fields that have developed around electric conductors of the converter unit and/or of the electric machine connectable to the electric machine interface of the converter unit begin to collapse. The changing magnetic fields around said electric conductors induce a reactive voltage in the converter unit, particularly at the opened switches of the converter unit. The at least one snubber capacitor is in place to be charged up by the reactive voltage, thereby alleviating the reactive voltage acting on the opened switches. Thus, the at least one snubber capacitor effectively acts a buffer or damper for inductive energy stored in the electric conductors of the converter unit and/or of the electric machine connectable to the electric machine interface. In other words, the at least one snubber capacitor serves as a protection for the switches of the converter unit from excessively high reactive voltages. Thereby, the snubber capacitor is electrically charged. After the at least one snubber capacitor has been charged up by the reactive voltage, hence, after the predefined waiting time, the same pair of switches that had been opened at the end of the first predefined time span is closed again for a second predefined time span. This has the effect that energy stored in the at least one snubber capacitor in the form of capacitive energy is provided to the electric machine interface. Hence, the capacitive energy stored in the at least one snubber capacitor may be provided to the electric machine connectable to the electric machine interface. As a result, inductive energy stored in the electric conductors of the converter unit and/or of the electric machine connectable to the electric machine interface that would otherwise have been lost, e.g. thermally dissipated, is converted into capacitive energy that may be used for powering the electric machine of the vehicle, in other words, for driving the vehicle. Still in other words, the at least one snubber capacitor acts as a temporary storage for said energy during the conversion from inductive energy into capacitive energy and during the provision of the capacitive energy to the electric machine interface. Moreover, closing the pair of switches during the second time span for providing the capacitive energy to the electric machine may have the effect that a comparatively small capacitance of the snubber capacitor may be sufficient for achieving buffering or dampening of voltage peaks. It is understood that during execution of the above-explained method, another pair of switches of the H-bridge of the converter unit, which may also be referred to as second pair of switches, is permanently open, i.e. not closed. Thus, the above method applies to one current supply half cycle for a single phase of the electric machine. A current supply half cycle is understood as that part of a full cycle of AC provided to the electric machine interface during which the direction of the provided current does not change. Altogether, the inductive energy that occurs due to the opening of the pair of switches is used for driving the electric machine instead of being lost. This enhances the energy efficiency.

In an example, the converter unit comprises a plurality of H-bridges that are connected in parallel to each other. Each first pair of switches of the plurality of H-bridges may be operated consecutively such that each first pair of switches of each H-bridge is successively closed until all first pairs of switches are closed. Likewise, each first pair of switches of the plurality of H-bridges may be operated consecutively such that each first pair of switches is successively opened until all first pairs of switches are opened again. This way, a sinusoidal voltage curve provided to the electric machine interface may be approximated. It is understood that the method according to the present disclosure may be applied to each H-bridge of the plurality of H-bridges of the converter unit. Hence, the process of closing the first pair of switches of a particular H-bridge after the predefined waiting time for the second predefined time span may be repeated for each H-bridge after its first pair of switches has been opened right after a lapse of the first predefined time span. This has the effect that energy losses are minimized at the end of each approximation step for the sinusoidal voltage curve. Hence, at the end of the first predefined timespan of each approximation step, inductive energy may be provided to the electric machine interface during the second predefined time span for powering the electric machine connectable to the electric machine interface.

In an example, the second time span and the waiting time are very small as compared to the first time span. In an example, the second time span and/or the waiting time is less than 10% of the first time span. In another example, the second time span and/or the waiting time is less than 1% of the first time span. This has the effect that a sufficient amount of primary energy provided by the electric power source via the electric power source interface may be provided to the electric machine interface during the first predefined time span. Thus, the electric machine of the vehicle connectable to the electric machine interface may be powered by a sufficient amount of primary energy to drive the vehicle. The inductive energy regained for powering the electric machine may be referred to as secondary energy. Since the amount of secondary energy is small compared to the amount of primary energy, the second time span and the waiting time being very small as compared to the first time span are sufficient for discharging the secondary energy to the electric machine connectable to the electric machine interface.

In an example, the second time span and/or the waiting time is fixed. In other words, the second time span and the waiting time may each be constant. Providing a fixed second time span and a fixed waiting time has the effect that control of the converter unit may be achieved in an efficient and simple to implement manner. It is understood that the second time span and/or the waiting time are adapted to the specific implementation such that the desired enhancement of energy efficiency is achieved.

In an example, the predefined waiting time and/or the second time span is based on an inductance of the converter unit and on a capacitance of the at least one snubber capacitor. The concept behind this is that the inductance of the converter unit and the capacitance of the snubber capacitor form an oscillating circuit, in other words, a resonant circuit. A resonant frequency $f_0$ of the oscillating circuit may be determined by the formula

$$f_0 = \frac{1}{2\pi\sqrt{LC}}$$, wherein L stands for the inductance of the converter unit in Henry and C stands for the capacitance of the snubber capacitor in Farad. Thus, a period duration $d_0$ of the oscillating circuit may be determined by the formula $$d_0 = 2\pi\sqrt{LC}$$. The predefined waiting time and/or the second time span may be defined as a percentage of the period duration $d_0$. This has the effect that the predefined waiting time and/or the second time span are adapted to the electric characteristics of the converter unit. This may further increase an energy efficiency of the converter unit. This is in particular the case if the inductance of the converter unit and the capacitance of the snubber capacitor change over time, e.g. due to ageing processes.

In an example, the predefined waiting time may be set to 15% to 50%, e.g. 25%, of the period duration $d_0$.

After a lapse of this waiting time, the at least one snubber capacitor is expected to be fully charged. Thus, causing closure of the first pair of switches for supplying the electric energy stored in the at least one snubber capacitor to the electric machine interface after the respective switches had been open for the waiting time, a maximum amount of capacitive energy stored in the at least one snubber capacitor may be used for powering the electric machine of the vehicle. This leads to a very high energy efficiency.

In an example, the sum of the predefined waiting time and the second time span may be set to 15% to 50%, e.g. 25%, of the period duration $d_0$. After a lapse of this waiting time and this second time span, a maximum of inductive energy stored in the converter unit is expected to have been available for conversion and/or regaining for powering the electric machine of the vehicle. Thus, ending closure of the first pair of switches for supplying the electric energy stored in the at least one snubber capacitor to the electric machine interface after this waiting time and this second time span, a maximum amount of inductive energy stored in the converter unit may be converted and/or regained for powering the electric machine of the vehicle.

In an example, the second time span may be defined as a percentage of the predefined waiting time and/or of the sum of the predefined waiting time and the second time span. This is a simple and reliable method of setting the second time span.

In another example, the second time span may be defined based on the capacitance of the at least one snubber capacitor. A time period $t_H$ during which a capacitor has discharged half of its capacitive charge is generally defined by the formula $t_H = RC \ln(2)$, wherein R stands for the electric resistance resisting the discharge of the capacitor in Ohms and C stands for the capacitance of the snubber capacitor in Farad. Defining the second time span as a percentage or as a multiple of the time period $t_H$, thus, based on the capacitance of the at least one snubber capacitor, has the effect that a defined percentage of energy that has been converted from inductive energy into capacitive energy can be regained for powering the electric machine of the vehicle. In particular, defining the second time span as a percentage or multiple of the time period $t_H$ ensures that a minimum percentage of energy that has been converted from inductive energy into capacitive energy can be regained for powering the electric machine of the vehicle.

In an example, the method further comprises optimizing the second time span and/or the waiting time. An optimization of the second time span and/or of the waiting time may be necessary because either the capacitance C of the at least one snubber capacitor or the inductance L of the converter unit may not be precisely known. Additionally or alternatively, the capacitance C of the at least one snubber capacitor or the inductance L of the converter unit may vary over time, e.g. due to aging processes. In particular, the capacitance C of the at least one snubber capacitor and/or the inductance L of the converter unit may decrease over the service life of the vehicle. Thus, the waiting time and/or the second time span having been defined on nominal values for the capacitance C and the inductance L may not contribute to optimal switching times of the pair of switches of the H-bridge. In other words, the waiting time and/or the second time span having been defined on nominal values for the capacitance C and the inductance L may not yield an optimum amount of inductive energy converted into capacitive energy and used for powering the electric machine of the vehicle. Still in other words, an optimized second time span and/or waiting time has the effect that a maximum amount of inductive energy stored in the converter unit may be converted into capacitive energy that can thereupon be used for powering the electric machine of the vehicle. The optimization may comprise techniques of machine learning, especially reinforcement learning.

It is noted that an objective of optimizing the second time span and/or the waiting time may be to have a maximum charge provided at the electric machine interface during the second time span. This comes back to optimizing for having a maximum of electric energy provided at the electric machine interface during the second time span.

In an example, the method further comprises:

- obtaining first data indicative of an amount of capacitive energy stored in the at least one snubber capacitor, and
- adapting the waiting time and/or the second time span based on the first data.

Obtaining the first data may be understood as receiving or determining the first data indicative of the amount of capacitive energy stored in the at least one snubber capacitor. The first data may for example comprise a voltage across the snubber capacitor. The amount of capacitive energy Ec stored in the at least one snubber capacitor may be derived from the voltage across the at least one snubber capacitor by the formula

$$E_C = \frac{1}{2}CU^2,$$ wherein U stands for the voltage across the at least one snubber capacitor in Volts. If the amount of capacitive energy Ec stored in the at least one snubber capacitor decreases prior to an end of the waiting time, the waiting time may need to be shortened. This has the effect that it is avoided that a portion of the stored capacitive energy Ec is provided to the electric power source connectable to the electric power source interface during the waiting time. Providing capacitive energy Ec to the electric power source of the vehicle, in other words, charging the electric power source of the vehicle by a portion of the stored capacitive energy Ec incurs more energy losses than directly using the stored capacitive energy Ec for powering the electric machine of the vehicle. If the amount of capacitive energy Ec stored in the at least one snubber capacitor at the end of the waiting time is a maximum amount of capacitive energy Ec during the waiting time, the waiting time may need to be lengthened. This has the effect that it is avoided that only a portion of the inductive energy stored in the converter unit is converted into capacitive energy before closing the first pair of switches again. In other words, it is made sure that the capacitive energy Ec stored in the at least one snubber capacitor plateaus at the end of the waiting time. Thus, an efficiency of the converter unit may be increased, and energy losses may be minimized. The second time span may also be adapted based on the first data such that the capacitor has discharged a predefined minimum percentage of its maximum stored capacitive energy Ec within the second time span. If the discharged amount of capacitive energy Ec is below the minimum percentage, the second timespan may need to be lengthened. If the discharged amount of capacitive energy Ec is above the minimum percentage, the second timespan may remain unchanged or may need to be shortened. Altogether, obtaining first data and adapting the waiting time and/or the second time span based thereon leads to waiting times and/or second time spans suitable for an enhanced energy efficiency.

In an example, the method further comprises:

- obtaining second data indicative of an electric current at the electric power source interface measured after the first time span, and
- adapting the waiting time and/or the second time span based on the second data.

Obtaining the second data may be understood as receiving or determining the second data indicative of an electric current at the electric power source interface measured after the first time span. If current flows back from the converter unit into the electric power source via the electric power source interface during the waiting time, the waiting time may need to be shortened. This may particularly concur in a case in which the amount of capacitive energy Ec stored in the at least one snubber capacitor decreases prior to an end of the waiting time. Shortening the waiting time in this scenario has the effect that energy losses due to charging of the electric power source connectable to the electric power source interface are avoided. If current flows back from the converter unit into the electric power source via the electric power source interface after the second time span, the second time span may need to be lengthened. Such a scenario indicates that the second time span is not long enough for the capacitive energy Ec stored in the at least one snubber capacitor to be discharged by providing said energy to the electric machine interface. Thus, lengthening the second time span in the outlined scenario ensures that the capacitive energy stored in the at least one snubber capacitor is used for powering the electric machine of the vehicle. If current flows from the electric power source via the electric power source interface into the converter unit during the second time span, the second time span may need to be shortened. This way, it is avoided that electric energy other than the capacitive energy Ec stored in the at least one snubber capacitor is provided to the electric machine interface and is, thus, used for powering the electric machine of the vehicle during the second time span. Altogether, obtaining second data and adapting the waiting time and/or the second time span based thereon leads to waiting times and/or second time spans suitable for an enhanced energy efficiency.

It is understood that the above explained lengthening and shortening of time spans may be implemented in incremental steps. The size of the incremental steps may be predefined. Alternatively, the size of the incremental steps may be increased as an obtained parameter, namely first data and/or second data, deviates from an expected reference value by a higher margin than allowed and/or deemed acceptable. This has the effect that the waiting time and the second time span may be efficiently modified such that energy losses are minimized.

The method of the present disclosure may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data

According to a second aspect, there is provided a data processing apparatus comprising means for carrying out the method of the first aspect. Using such a data processing apparatus, the converter unit for an electric machine of a vehicle may be controlled in a reliable manner. In particular, the at least one snubber capacitor of the converter unit effectively acts a buffer or damper for inductive energy stored in the electric conductors of the converter unit and/or of the electric machine connectable to the electric machine interface of the converter unit. In other words, the at least one snubber capacitor serves as a protection for the switches of the converter unit from excessively high reactive voltages. After the at least one snubber capacitor has been charged up by the reactive voltage, hence, after the predefined waiting time, the same pair of switches that had been opened at the end of the first predefined time span is closed again for a second predefined time span. This has the effect that energy stored in the at least one snubber capacitor in the form of capacitive energy is provided to the electric machine interface. Hence, the capacitive energy stored in the at least one snubber capacitor may be provided to the electric machine connectable to the electric machine interface. As a result, inductive energy stored in the electric conductors of the converter unit and/or of the electric machine connectable to the electric machine interface that would otherwise have been lost, e.g. thermally dissipated, is converted into capacitive energy that may be used for powering the electric machine of the vehicle, in other words, for driving the vehicle. Still in other words, the at least one snubber capacitor acts as a temporary storage for said energy during the conversion from inductive energy into capacitive energy and during the provision of the capacitive energy to the electric machine interface. Altogether, the inductive energy that occurs due to the opening of the pair of switches is used for driving the electric machine instead of being lost. This enhances the energy efficiency.

In an example, the data processing apparatus comprises a distributed data processing apparatus comprising a first subunit and a second subunit. The first subunit is communicatively connected to the switches of the H-bridge of the converter unit. The second subunit is communicatively connected to a first sensing unit for providing first data indicative of an amount of capacitive energy stored in the snubber capacitor and/or communicatively connected to a second sensing unit for providing second data indicative of an electric current at the electric power source interface. The first subunit and the second subunit may be communicatively connected to each other via a wired connection. A wired connection is a reliable way of exchanging data at a minimal level of signal disturbance between subunits of the data processing apparatus. Additionally or alternatively, the first subunit and the second subunit may be connected to each other via a wireless connection such as Bluetooth, especially Bluetooth low latency, and/or Wi-Fi. A wireless connection between subunits of the data processing apparatus may ease manufacturability because no cables need to be laid during installation of the subunits of the data processing apparatus in the vehicle.

According to a third aspect, there is provided a computer program comprising instructions which, when the computer program is executed by a computer, cause the computer to carry out the method of the first aspect. Using such a computer program, the converter unit for an electric machine of a vehicle may be controlled in a reliable manner. In particular, the at least one snubber capacitor of the converter unit effectively acts a buffer or damper for inductive energy stored in the electric conductors of the converter unit and/or of the electric machine connectable to the electric machine interface of the converter unit. In other words, the at least one snubber capacitor serves as a protection for the switches of the converter unit from excessively high reactive voltages. After the at least one snubber capacitor has been charged up by the reactive voltage, hence, after the predefined waiting time, the same pair of switches that had been opened at the end of the first predefined time span is closed again for a second predefined time span. This has the effect that energy stored in the at least one snubber capacitor in the form of capacitive energy is provided to the electric machine interface. Hence, the capacitive energy stored in the at least one snubber capacitor may be provided to the electric machine connectable to the electric machine interface. As a result, inductive energy stored in the electric conductors of the converter unit and/or of the electric machine connectable to the electric machine interface that would otherwise have been lost, e.g. thermally dissipated, is converted into capacitive energy that may be used for powering the electric machine of the vehicle, in other words, for driving the vehicle. Still in other words, the at least one snubber capacitor acts as a temporary storage for said energy during the conversion from inductive energy into capacitive energy and during the provision of the capacitive energy to the electric machine interface. Altogether, the inductive energy that occurs due to the opening of the pair of switches is used for driving the electric machine instead of being lost. This enhances the energy efficiency.

According to a fourth aspect, there is provided a computer-readable storage medium comprising instructions which, when executed by a computer, cause the computer to carry out the method of the first aspect. Using such a computer-readable storage medium, the converter unit for an electric machine of a vehicle may be controlled in a reliable manner. In particular, the at least one snubber capacitor of the converter unit effectively acts a buffer or damper for inductive energy stored in the electric conductors of the converter unit and/or of the electric machine connectable to the electric machine interface of the converter unit. In other words, the at least one snubber capacitor serves as a protection for the switches of the converter unit from excessively high reactive voltages. After the at least one snubber capacitor has been charged up by the reactive voltage, hence, after the predefined waiting time, the same pair of switches that had been opened at the end of the first predefined time span is closed again for a second predefined time span. This has the effect that energy stored in the at least one snubber capacitor in the form of capacitive energy is provided to the electric machine interface. Hence, the capacitive energy stored in the at least one snubber capacitor may be provided to the electric machine connectable to the electric machine interface. As a result, inductive energy stored in the electric conductors of the converter unit and/or of the electric machine connectable to the electric machine interface that would otherwise have been lost, e.g. thermally dissipated, is converted into capacitive energy that may be used for powering the electric machine of the vehicle, in other words, for driving the vehicle. Still in other words, the at least one snubber capacitor acts as a temporary storage for said energy during the conversion from inductive energy into capacitive energy and during the provision of the capacitive energy to the electric machine interface. Altogether, the inductive energy that occurs due to the opening of the pair of switches is used for driving the electric machine instead of being lost. This enhances the energy efficiency.

According to a fifth aspect, there is provided a converter unit for an electric machine of a vehicle. The converter unit comprises:

- an electric power source interface connectable to an electric power source,
- an electric machine interface connectable to an electric machine,
- at least one H-bridge, wherein a switch is provided on each leg of the H-bridge,
- at least one snubber capacitor, and
- a data processing apparatus according to the second aspect.

The H-bridge and the at least one snubber capacitor are electrically interposed between the electric power source interface and the electric machine interface. The data processing apparatus is communicatively connected to the switches of the H-bridge.

The electric power source may be a traction battery of the vehicle. The electric machine of the vehicle may be a machine that is drivingly connected to at least one road wheel of the vehicle. Hence, the electric machine may be used for driving the vehicle. The at least one snubber capacitor is electrically connected in parallel to the at least one H-bridge. Electric energy from the electric power source provided to the converter unit via the electric power source interface may be converted from DC into AC by alternatingly opening and closing pairs of switches of the at least one H-bridge. The AC may be provided to the electric machine of the vehicle via the electric machine interface of the converter unit. Due to the data processing apparatus, the converter unit for an electric machine of a vehicle may be controlled in a reliable manner. In particular, the at least one snubber capacitor of the converter unit effectively acts a buffer or damper for inductive energy stored in the electric conductors of the converter unit and/or of the electric machine connectable to the electric machine interface of the converter unit. In other words, the at least one snubber capacitor serves as a protection for the switches of the converter unit from excessively high reactive voltages. After the at least one snubber capacitor has been charged up by the reactive voltage, hence, after the predefined waiting time, the same pair of switches that had been opened at the end of the first predefined time span is closed again for a second predefined time span. This has the effect that energy stored in the at least one snubber capacitor in the form of capacitive energy is provided to the electric machine interface. Hence, the capacitive energy stored in the at least one snubber capacitor may be provided to the electric machine connectable to the electric machine interface. As a result, inductive energy stored in the electric conductors of the converter unit and/or of the electric machine connectable to the electric machine interface that would otherwise have been lost, e.g. thermally dissipated, is converted into capacitive energy that may be used for powering the electric machine of the vehicle, in other words, for driving the vehicle. Still in other words, the at least one snubber capacitor acts as a temporary storage for said energy during the conversion from inductive energy into capacitive energy and during the provision of the capacitive energy to the electric machine interface. Altogether, the inductive energy that occurs due to the opening of the pair of switches is used for driving the electric machine instead of being lost. This enhances the energy efficiency.

In an example, the converter unit further comprises a first sensing unit for providing first data indicative of an amount of capacitive energy stored in the snubber capacitor. The first data may for example comprise a voltage across the snubber capacitor. Thus, the first sensing unit may be a voltmeter. The amount of capacitive energy $E_c$ stored in the at least one snubber capacitor may be derived from the voltage of the at least one snubber capacitor by the formula $E_C = \frac{1}{2}CU^2$, wherein U stands for the voltage across the at least one snubber capacitor in Volts. Based on the first data provided by the first sensing unit, the waiting time and/or the second time span may be adjusted. If the amount of capacitive energy $E_c$ stored in the at least one snubber capacitor decreases prior to an end of the waiting time, the waiting time may need to be shortened by the data processing apparatus. This has the effect that it is avoided that a portion of the stored capacitive energy $E_c$ is provided to the electric power source connectable to the electric power source interface. Providing capacitive energy $E_c$ to the electric power source of the vehicle, in other words, charging the electric power source of the vehicle by a portion of the stored capacitive energy $E_c$ incurs more energy losses than directly using the stored capacitive energy $E_c$ for powering the electric machine of the vehicle. If the amount of capacitive energy $E_c$ stored in the at least one snubber capacitor at the end of the waiting time is a maximum amount of capacitive energy $E_c$ during the waiting time, the waiting time may need to be lengthened by the data processing apparatus. This has the effect that it is avoided that only a portion of the inductive energy stored in the converter unit is converted into capacitive energy before closing the pair of switches again. In other words, it is made sure that the capacitive energy $E_c$ stored in the at least one snubber capacitor plateaus at the end of the waiting time. Thus, an efficiency of the converter unit may be increased, and energy losses may be minimized. The second time span may be adapted based on the first data such that the capacitor has discharged a predefined minimum percentage of its maximum stored capacitive energy $E_c$ within the second time span. If the discharged amount of capacitive energy $E_c$ is below the minimum percentage, the second timespan may need to be lengthened by the data processing apparatus. If the discharged amount of capacitive energy $E_c$ is above the minimum percentage, the second timespan may remain unchanged or may need to be shortened by the data processing apparatus. Altogether, adapting the waiting time and/or the second time span based on the first data provided by the first sensing unit leads to waiting times and/or second time spans suitable for an enhanced energy efficiency.

In an example, the converter unit further comprises a second sensing unit for providing second data indicative of an electric current at the electric power source interface. The second data may for example comprise a current measurement flowing through the electric power source interface. Thus, the second sensing unit may be a shunt, in other words, a low-resistance resistor to which a voltmeter as measurement device is connected in parallel. Using a shunt comes with the advantage that comparatively high currents can reliably be measured since only a small portion of the current actually flows through the measurement device. Based on the second data provided by the second sensing unit, the waiting time and/or the second time span may be adjusted. If current flows back into the electric power source via the electric power source interface during the waiting time, the waiting time may need to be shortened by the data processing apparatus. This may particularly concur with a case in which the amount of capacitive energy Ec stored in the at least one snubber capacitor decreases prior to an end of the waiting time. Shortening the waiting time in this scenario has the effect that energy losses due to charging the electric power source are avoided. If current flows back into the electric power source via the electric power source interface after the second time span, the second time span may need to be lengthened by the data processing apparatus. Such a scenario indicates that the second time span is not long enough for the capacitive energy Ec stored in the at least one snubber capacitor to be discharged by providing said energy to the electric machine interface. Thus, lengthening the second time span in the outlined scenario ensures that the capacitive energy stored in the at least one snubber capacitor is used for powering the electric machine of the vehicle. If current flows from the electric power source via the electric power source interface into the converter unit during the second time span, the second time span may need to be shortened by the data processing apparatus. This way, it is avoided that electric energy other than the capacitive energy Ec stored in the at least one snubber capacitor is provided to the electric machine interface and, thus, used for powering the electric machine of the vehicle. Altogether, the waiting time and/or the second time span may be adapted based on the second data. This leads to waiting times and/or second time spans suitable for an enhanced energy efficiency.

According to a sixth aspect, there is provided a drive assembly for a vehicle comprising a converter unit according to the fifth aspect and an electric machine. The electric machine is electrically coupled to the electric machine interface of the converter unit. Providing such a drive assembly, the converter unit for an electric vehicle may be controlled in a reliable manner. In particular, the at least one snubber capacitor of the converter unit effectively acts a buffer or damper for inductive energy stored in the electric conductors of the converter unit and/or of the electric machine connected to the electric machine interface of the converter unit. In other words, the at least one snubber capacitor serves as a protection for the switches of the converter unit from excessively high reactive voltages. After the at least one snubber capacitor has been charged up by the reactive voltage, hence, after the predefined waiting time, the same pair of switches that had been opened at the end of the first predefined time span is closed again for a second predefined time span. This has the effect that energy stored in the at least one snubber capacitor in the form of capacitive energy is provided to the electric machine interface. Hence, the capacitive energy stored in the at least one snubber capacitor is be provided to the electric machine connected to the electric machine interface. As a result, inductive energy stored in the electric conductors of the converter unit and/or of the electric machine connected to the electric machine interface that would otherwise have been lost, e.g. thermally dissipated, is converted into capacitive energy that may be used for powering the electric machine of the vehicle, in other words, for driving the vehicle. In other words, the at least one snubber capacitor acts as a temporary storage for said energy during the conversion from inductive energy into capacitive energy and during the provision of the capacitive energy to the electric machine via the electric machine interface. Altogether, the inductive energy that occurs due to the opening of the pair of switches is used for driving the electric machine instead of being lost. This enhances the energy efficiency.

According to a seventh aspect, there is provided a vehicle comprising a drive assembly of the sixth aspect. Providing such a vehicle, the converter unit of the vehicle may be controlled in a reliable manner. In particular, the at least one snubber capacitor of the converter unit effectively acts a buffer or damper for inductive energy stored in the electric conductors of the converter unit and/or of the electric machine connected to the electric machine interface of the converter unit. In other words, the at least one snubber capacitor serves as a protection for the switches of the converter unit from excessively high reactive voltages. After the at least one snubber capacitor has been charged up by the reactive voltage, hence, after the predefined waiting time, the same pair of switches that had been opened at the end of the first predefined time span is closed again for a second predefined time span. This has the effect that energy stored in the at least one snubber capacitor in the form of capacitive energy is provided to the electric machine interface. Hence, the capacitive energy stored in the at least one snubber capacitor is be provided to the electric machine connected to the electric machine interface. As a result, inductive energy stored in the electric conductors of the converter unit and/or of the electric machine connected to the electric machine interface that would otherwise have been lost, e.g. thermally dissipated, is converted into capacitive energy that may be used for powering the electric machine of the vehicle, in other words, for driving the vehicle. In other words, the at least one snubber capacitor acts as a temporary storage for said energy during the conversion from inductive energy into capacitive energy and during the provision of the capacitive energy to the electric machine via the electric machine interface. Altogether, the inductive energy that occurs due to the opening of the pair of switches is used for driving the electric machine instead of being lost. This enhances the energy efficiency.

It should be noted that the above examples may be combined with each other irrespective of the aspect involved.

These and other aspects of the present disclosure will become apparent from and elucidated with reference to the examples described hereinafter.

BRIEF DESCRIPTION OF DRAWINGS

Examples of the disclosure will be described in the following with reference to the following drawings.

Figure 1   shows a vehicle according to the present disclosure comprising a drive assembly according to the present disclosure, wherein the drive assembly comprises a converter unit according to the present disclosure,

Figure 2   schematically shows the drive assembly of the vehicle of Figure 1,

Figure 3   shows a diagram of a stepped voltage signal supplied to an electric machine of the vehicle of Figure 1,

Figure 4   shows a detail IV of the diagram of the voltage of Figure 3,

Figure 5   shows a diagram of an amount of capacitive energy stored in a snubber capacitor of the converter unit according to the present disclosure over a waiting time and a second predefined time span,

Figure 6   shows a diagram of an amount of capacitive energy stored in the snubber capacitor of the converter unit according to the present disclosure over a first predefined time span, the waiting time, the second predefined time span and a time period after the second predefined time span,

Figure 7   shows a diagram of a current flowing from the converter unit into an electric power source of the vehicle of Figure 1 during the waiting time,

Figure 8   shows a diagram of a current flowing from the converter unit into the electric power source of the vehicle of Figure 1 after the second time span, and

Figure 9   shows a diagram of a current flowing from the electric power source into the converter unit of the vehicle of Figure 1 during the second time span.

DETAILED DESCRIPTION

The Figures are merely schematic representations and serve only to illustrate examples of the disclosure. Identical or equivalent elements are in principle provided with the same reference signs.

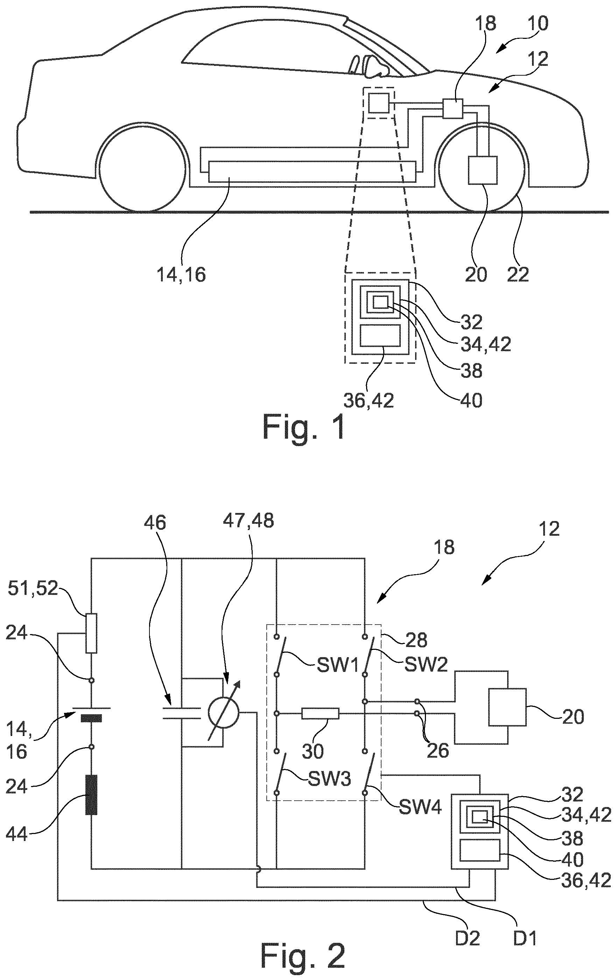

Figure 1 shows a vehicle 10.

The vehicle 10 comprises a drive assembly 12. The drive assembly 12 may also be referred to as a drivetrain of the vehicle 10.

The drive assembly 12 comprises a traction battery 14 forming an electric power source 16, a converter unit 18, and an electric machine 20.

The converter unit 18 is electrically interposed between the traction battery 14 and the electric machine 20. Thus, the converter unit 18 may convert DC from the traction battery 14 into AC that is provided to the electric machine 20. Using the converter unit 18, the phase and amplitude of the alternating current may be adapted such that the electric machine 20 may be operated at a certain rotational speed and/or provide a certain torque.

In the present example, the electric machine 20 is drivingly connected to the front road wheels 22 of the vehicle 10. Thus, the electric machine 20 drives a front axle of the vehicle 10. It is understood that the electric machine 20 may additionally or alternatively be connected to any other road wheel of the vehicle 10, e.g. the rear road wheels of a rear axle.

Details of the converter unit 18 are shown in Figure 2.

The converter unit 18 comprises an electric power source interface 24, which is electrically connected to the traction battery 14.

The converter unit 18 further comprises an electric machine interface 26, which is electrically connected to the electric machine 20 that drives the front axle of the vehicle 10.

Moreover, the converter unit 18 comprises an H-bridge 28.

At each leg of the H-bridge 28, there is provided a switch SW1, SW2, SW3, SW4 for interrupting or establishing an electric connection to and from the H-bridge 28. In Figure 2, the switches are denoted by SW1, SW2, SW3, and SW4.

The switches SW1, SW2, SW3, SW4 may be operated in a concerted manner such that DC provided by the traction battery 14 is converted into AC for powering the electric machine 20. To this end, switch SW1 and switch SW4 form a first pair of switches. Switch SW1 and switch SW4 are always simultaneously opened or closed. Switch SW2 and switch SW3 form a second pair of switches. Also switch SW2 and switch SW3 are always simultaneously opened or closed.

The switches of the first pair of switches SW1, SW4 and the switches of the second pair of switches SW2, SW3 are opened or closed in an alternating manner. This means that if one of the pairs of switches is closed, i.e. if both of the switches of the pair of switches are closed, the respective other one of the pairs of switches is open, i.e. both of the switches of the respective other pair of switches is opened.

If the two switches of one pair of switches are closed, they are electrically connected in series to each other and in series to an electric phase of the electric machine 20 of the vehicle 10. Thus, by closing one pair of switches, electric current provided by the traction battery 14 is supplied to the electric machine 20 via one phase in a first direction.

If the two switches of the one pair of switches are opened, the two switches of the other pair of switches are closed. Due to the crossed arrangement of the two pairs of switches, a closure of the other pair of switches causes electric current provided by the traction battery 14 to be supplied to the electric machine 20 via the one phase in a second direction that is opposite to the first direction. Due to the fact that the first direction and the second direction of electric current provided to the electric machine 20 are opposite to each other, the converter unit 18 may provide AC to the electric machine 20.

The converter unit 18 may not only provide a positive and a negative of a given voltage level to the electric machine 20. Instead, the converter unit 18 may also provide a stepped voltage profile over time to the electric machine 20. This stepped voltage profile may comprise positive and negative voltages.

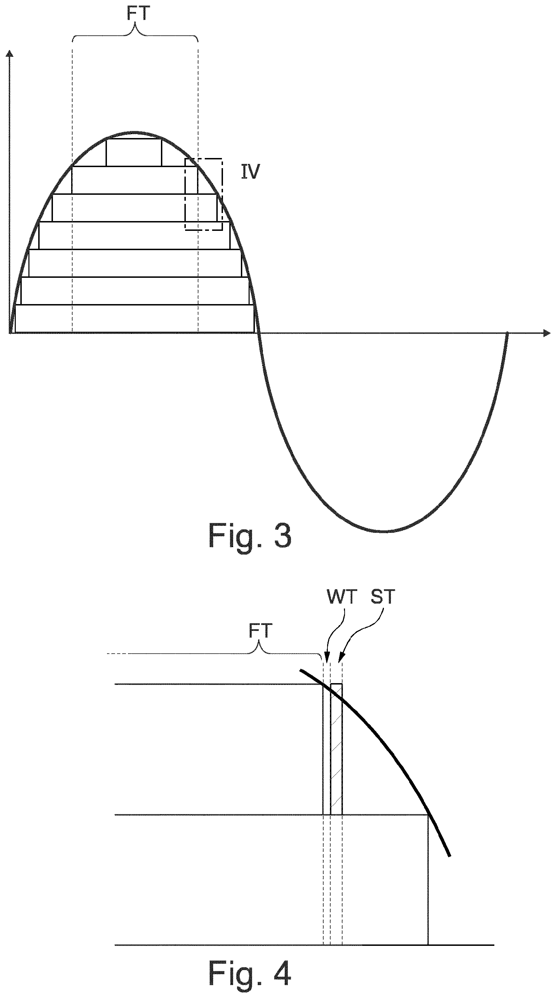

The stepped voltage profile resembles a sinus curve. This is illustrated in Figure 3.

To this end, the converter unit 18 comprises a plurality of H-bridges 28 that are electrically connected in parallel to each other. In the example of Figure 3, the converter unit comprises seven H-bridges 28 in parallel. This can be seen from the schematic representation of the stepped approximation of the sinusoidal voltage curve in Figure 3. It is understood that in a real-world application, there may be many more than seven H-bridges to achieve an approximation of a sinusoidal course of voltage provided to the electric machine 20. The approximation of a sinus curve by seven steps in Figure 3 only serves illustrative purposes.

Each H-bridge 28 of the plurality of H-bridges 28 comprises a resistor 30. By selecting and/or adjusting an electric resistance value of the resistor 30 of each H-bridge 28, a particular percentage of voltage across the traction battery 14 is provided to the electric machine 20.

If multiple of the H-bridges 28 are conductive due to their respective first pair of switches or second pair of switches being closed, the resistors 30 of the multiple conductive H-bridges 28 are connected in parallel, resulting in a high percentage of voltage across the traction battery 14 being provided to the electric machine 20.

If few of the H-bridges 28 are conductive due to their respective first pair of switches or second pair of switches being closed, only the resistors 30 of the few conductive H-bridges are connected in parallel, resulting in a low percentage of voltage across the traction battery 14 being provided to the electric machine 20.

The converter unit 18 further comprises a data processing apparatus 32. The data processing apparatus 32 is configured to cause the switches SW1, SW2, SW3, SW4 of the H-bridges 28 to be switched. In other words, the data processing apparatus 32 controls the switches SW1, SW2, SW3, SW4 of the H-bridges 28. Thus, the data processing apparatus 32 may also be referred to as a control unit.

To this end, the data processing apparatus 32 is communicatively connected to the switches SW1, SW2, SW3, SW4 of the H-bridges 28.

The data processing apparatus 32 comprises a data storage unit 34 and data processing unit 36.

The data storage unit 34 comprises a computer-readable storage medium 38.

On the computer-readable storage medium 38, there is provided a computer program 40.

The computer program 40 and, thus, also the computer-readable storage medium 38, comprise instructions which, when executed by the data processing unit 36, or, more generally speaking, a computer, cause the computer or the data processing unit 36 to carry out a method for controlling a converter unit 18 for an electric machine 20 of a vehicle 10.

Consequently, the data storage unit 34 and the data processing unit 36 form means 42 for carrying out the method for controlling a converter unit 18 for an electric machine 20 of a vehicle 10.

In the following, the steps of the method will be explained at the example of the sixth step of the stepwise approximation of the sinusoidal voltage curve shown in Figures 3 and 4. The sixth step of the approximation is counted starting from the x-axis in a direction of the positive y-axis in the diagram of Figure 3.

In step S1, the first pair of switches of the H-bridge 28 of the sixth approximation step, i.e. switches SW1 and SW4, is closed for a first predefined time span FT. Consequently, electric current is supplied to the electric machine 18 connected to the electric machine interface 26.

At the same time, i.e. during the first predefined time span FT, the second pair of switches of the H-bridge 28 of the sixth approximation step, i.e. switches SW2 and SW3, is kept open.

After a lapse of the first predefined time span FT, the first pair of switches is opened for the duration of a waiting time WT.

During the waiting time WT, magnetic fields that have developed around electric conductors of the converter unit 18 collapse in a gradual manner. The gradual collapse in the magnetic fields represents a change in magnetic field around the electric conductors of the converter unit 18. Consequently, a reactive voltage is created in the electric conductors of the converter unit 18. This may be referred to as a release of inductive energy stored in the converter unit 18.

As a symbol of inductivity of the converter unit 18, an inductive charge 44 is indicated in Figure 2. It is emphasized that the converter unit 18 itself does not comprise a dedicated component such as a coil that constitutes the inductive charge 44. In fact, electric connections of the converter unit 18, e.g. wires, make up the inductive charge 44. Even simple electric connections like wires of the converter unit 18 may act as an inductive charge 44 due to strong electric currents of approximately 1000 A that are provided to the electric machine 20 by the converter unit 18.

In order to protect the switches SW1, SW2, SW3, SW4 of the H-bridge 28 from excessive reactive voltages, the converter unit 18 further comprises a snubber capacitor 46. The snubber capacitor 46 is electrically connected in parallel to the traction battery 14 and in parallel to the H-bridge 28.

The snubber capacitor 46 acts as a buffer or damper for the reactive voltage that is created in the electric conductors of the converter unit 18 when a pair of switches SW1, SW2, SW3, SW4 of the H-bridge 28 is opened for the period of the waiting time WT after the lapse of the first predefined time span FT. In other words, the waiting time WT is directly consecutive to the first predefined time span FT. The buffering works by charging up the snubber capacitor 46 by the created reactive voltage. Thus, inductive energy stored in the converter unit 18 is converted into capacitive energy during the waiting time WT.

After the lapse of the waiting time WT, a second time span ST immediately follows. In other words, the second time span ST is directly consecutive to the waiting time WT. As can be seen from Figure 4, it is understood that the waiting time WT and the second time span ST are very small as compared to the first time span FT. For example, the waiting time WT and/or the second time span ST may amount to a few percentage points of the first time span FT.

During the second time span ST, the first pair of switches of the H-bridge 28, i.e. SW1 and SW4, is closed again (step S2). Due to this, an amount of capacitive energy stored in the snubber capacitor 46 is discharged by providing said capacitive energy to the electric machine 20 of the vehicle 10 via the electric machine interface 26 (see hatched portion in Figure 4). In other words, the amount of capacitive energy stored in the snubber capacitor 46, which resulted from the initial inductive energy stored in the converter unit 18, is used for powering the electric machine 20 of the vehicle 10.

In simplified words, opening the first pair of switches, i.e. SW1 and SW4, creates an induction current which is used to charge the snubber capacitor 46. The snubber capacitor 46 and the portions of the converter unit 18 being subject to inductance form an oscillating circuit. Thus, the electric charge in the snubber capacitor 46 oscillates back. This is used for powering the electric machine 20 during the second time span ST.

In the present example, the waiting time WT and/or the second time span ST are continuously or periodically optimized based on a capacitance of the snubber capacitor 46 and based on an inductivity of the converter unit 18 (step S3).

The step of optimization involves an optimization of the waiting time WT and/or of the second time span ST based on first data D1 indicative of an amount of capacitive energy stored in the snubber capacitor 46. Moreover, the step of optimization involves an optimization of the waiting time WT and/or of the second time span ST based on second data D2 indicative of an electric current at the electric power source interface 24 measured after the first time span FT.

The optimization of the waiting time WT and/or of the second time span ST based on first data D1 indicative of an amount of capacitive energy stored in the snubber capacitor 46 will be explained first.

The amount of capacitive energy stored in the snubber capacitor 46 may be derived from a voltage across the snubber capacitor 46 by the formula

$$E_C = \frac{1}{2} C U^2$$ , wherein C stands for the capacitance of the snubber capacitor 46 and U stands for a voltage across the snubber capacitor 46.

Thus, the voltage across the snubber capacitor 46 may be denoted as first data D1 indicative of an amount of capacitive energy stored in the snubber capacitor 46.

For obtaining the first data D1 indicative of the amount of capacitive energy stored in the snubber capacitor 46 (step S4), the converter unit 18 comprises a first sensing unit 47 that is electrically connected in parallel to the snubber capacitor 46. In the present example, the first sensing unit 47 comprises a voltmeter 48. The voltmeter 48 is communicatively connected to the data processing apparatus 32.

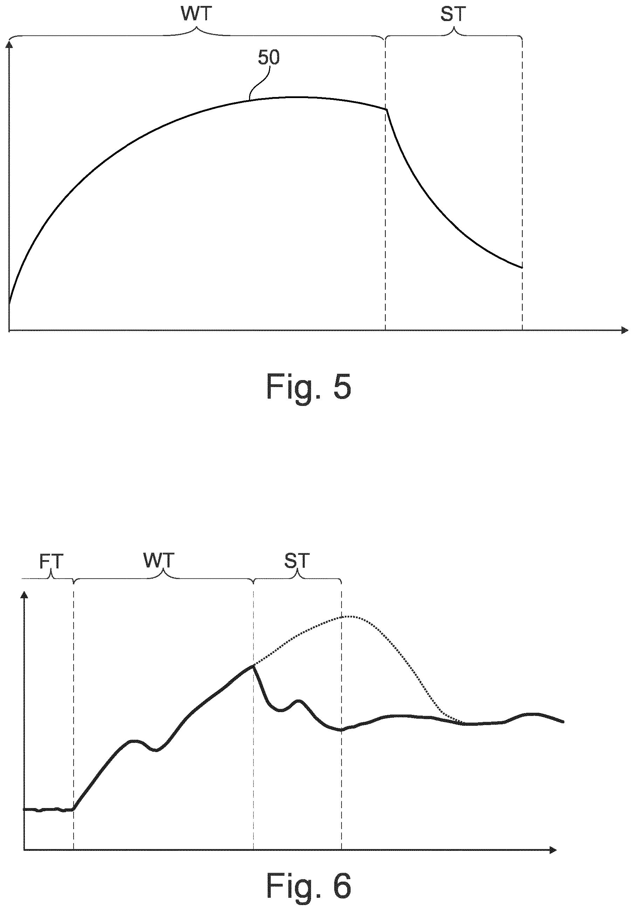

A representative course of an amount of capacitive energy stored in the snubber capacitor 46 over the waiting time WT and the second time span is shown in the diagram of Figure 5.

It is observable that the amount of capacitive energy stored in the snubber capacitor 46 increases until it reaches a maximum 50 of capacitive energy stored in the snubber capacitor 46 during the waiting time WT. This part of the course of the amount of capacitive energy stored in the snubber capacitor 46 represents a charging of the snubber capacitor 46 by the inductivity of the converter unit 18.

From the maximum amount of capacitive energy onwards and still during the waiting time WT, the amount of capacitive energy stored in the snubber capacitor 46 can be observed to decrease. This part of the course of the amount of capacitive energy stored the snubber capacitor 46 represents a discharging of the snubber capacitor 46. During the discharging, the capacitive energy stored in the snubber capacitor 46 is oscillated back towards the inductivity of the converter unit 18. Additionally or alternatively, the capacitive energy stored in the snubber capacitor 46 is provided to the electric power source 16 via the electric power source interface 24. In other words, the electric power source 16, which in the present example is the traction battery 14, is charged by the capacitive energy stored in snubber capacitor 46.

Ideally, the amount of capacitive energy stored in the snubber capacitor 46 reaches its maximum right at the end of the waiting time WT. This way, a maximum amount of inductive energy stored in the converter unit 18 is converted into capacitive energy that can be used for powering the electric machine 20 of the vehicle 10 in the next steps of the method, i.e. during the second time span ST.

Thus, the waiting time WT is adapted based on the first data D1 (step S5).

If the amount of capacitive energy stored in the snubber capacitor 46 decreases towards an end of the waiting time WT as shown in Figure 5, the waiting time WT is shortened.

If the amount of capacitive energy stored in the snubber capacitor 46 reaches its maximum right at the end of the waiting time WT, the waiting time WT is lengthened.

Not only the waiting time WT but also the second time span ST is adapted based on the first data D1. The concept there behind is also shown in Figure 5.

It is observable in the diagram of Figure 5 that the snubber capacitor 46 rapidly discharges its stored capacitive energy in an exponentially decreasing manner within the second time span ST. This represents the provision of the capacitive energy stored in the snubber capacitor 46 to the electric machine 20 of the vehicle 10 while the switches of the first pair of switches SW1, SW4 of the H-bridge 28 are closed in step S2, i.e. during the second time span ST.

From the diagram in Figure 5, it is observable that about 75% of the capacitive energy stored in the snubber capacitor 46 at the end of the waiting time WT are discharged from the snubber capacitor 46 to the electric machine 20 of the vehicle 10 during the second time span ST.

The percentage of capacitive energy stored in the snubber capacitor 46 at the end of the waiting time WT that is discharged from the snubber capacitor 46 to the electric machine 20 of the vehicle 10 is changed by adapting the second time span ST (S5).

If, in the present example, more than about 75% of the capacitive energy stored in the snubber capacitor 46 at the end of the waiting time WT shall be discharged to the electric machine 20 of the vehicle 10, the second time span ST needs to be lengthened.

If, in the present example, less than about 75% of the capacitive energy stored in the snubber capacitor 46 at the end of the waiting time WT shall be discharged to the electric machine 20 of the vehicle 10, the second time span ST needs to be shortened.

Note that it is usually not possible to discharge a full amount of the capacitive energy stored in the snubber capacitor 46 at the end of the waiting time WT. This is because this would take an overly long period of time due to the exponential decrease of the amount of capacitive energy stored in the snubber capacitor 46 during the discharging. An overly long second time span ST would negatively and over-proportionally interact with the generally desired sinusoidal voltage curve that shall be provided to the electric machine 20 of the vehicle 10.

The diagram in Figure 6 shows a comparison of illustrative courses of an amount of capacitive energy stored in the snubber capacitor 46 over the first time span FT, the waiting time WT, the second time span ST and a time period immediately after the second time span ST in a case in which the method for controlling a converter unit 18 for an electric machine 20 of a vehicle 10 is executed and in a case in which the method is not executed.

The solid line represents an amount of capacitive energy stored in the snubber capacitor 46 in a case in which the method for controlling a converter unit 18 for an electric machine 20 of a vehicle 10 is executed. It can be observed that during the second time span ST, the snubber capacitor 46 is rapidly discharged. This is because of the provision of the capacitive energy stored in the snubber capacitor 46 to the electric machine 20 of the vehicle 10 while the switches of the first pair of switches SW1, SW4 of the H-bridge 28 are closed in step S2, i.e. during the second time span ST.

The dotted line represents an amount of capacitive energy stored in the snubber capacitor 46 if the method is not executed. It can be observed that although the waiting time WT has lapsed, the snubber capacitor 46 keeps getting charged up by the inductivity of the converter unit 18. Thus, the snubber capacitor 46 absorbs more energy if the method is not executed than if the method is executed. After the snubber capacitor 46 has reached its maximum charge, it slowly discharges and dissipates the capacitive energy stored in the snubber capacitor 46 as losses to an environment without making use of said energy for powering the electric machine 20 of the vehicle 10.

Hence, executing the method for controlling a converter unit 18 for an electric machine 20 of a vehicle 10 reduces energy losses, increases an energy efficiency of the converter unit 18 and, thus, also an energy efficiency of powering the electric machine 20 of the vehicle 10. Moreover, a snubber capacitor 46 having a comparatively small capacitance may be used. In particular, the capacitance of the snubber capacitor 46 may be smaller than in a case in which the method for controlling a converter unit 18 is not executed.

In the following, the optimization of the waiting time WT and/or of the second time span ST based on second data D2 indicative of an electric current at the electric power source interface 24 measured after the first time span FT will be explained.

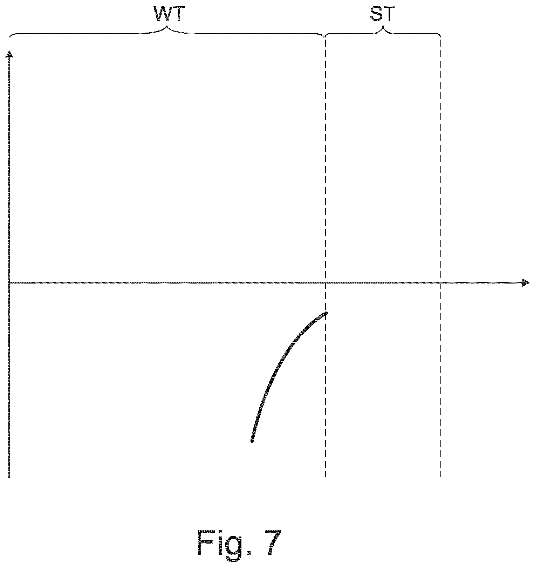

Figure 7 shows a diagram of an electric current flowing across the electric power source interface 24 measured after the first time span FT, more precisely, during the waiting time WT. Thus, the diagram of Figure 7 is a representation of second data D2 after the first time span FT.

For obtaining the second data D2 (step S6), the converter unit 18 comprises a second sensing unit 51. In the present example, the second sensing unit 51 comprises a shunt 52. The shunt 52 is interposed between a connection interface of the electric power source interface 24 and the H-bridge 28. Moreover, the shunt 52 is communicatively connected to the data processing apparatus 32.

During the waiting time WT in the diagram of Figure 7, current flows back from the converter unit 18 into the traction battery 14. This is due to the capacitive energy stored in the snubber capacitor 46 being discharged into the traction battery 14 during the waiting time WT. This scenario corresponds to the case as shown in Figure 5, in which the amount of capacitive energy stored in the snubber capacitor 46 decreases before the end of the waiting time WT.

Thus, if a current flowing from the converter unit 18 back to the traction battery 14 is detected during the waiting time WT, the waiting time WT is shortened to avoid further such current flow. In other words, the waiting time WT is adapted based on the second data D2 (step S7).

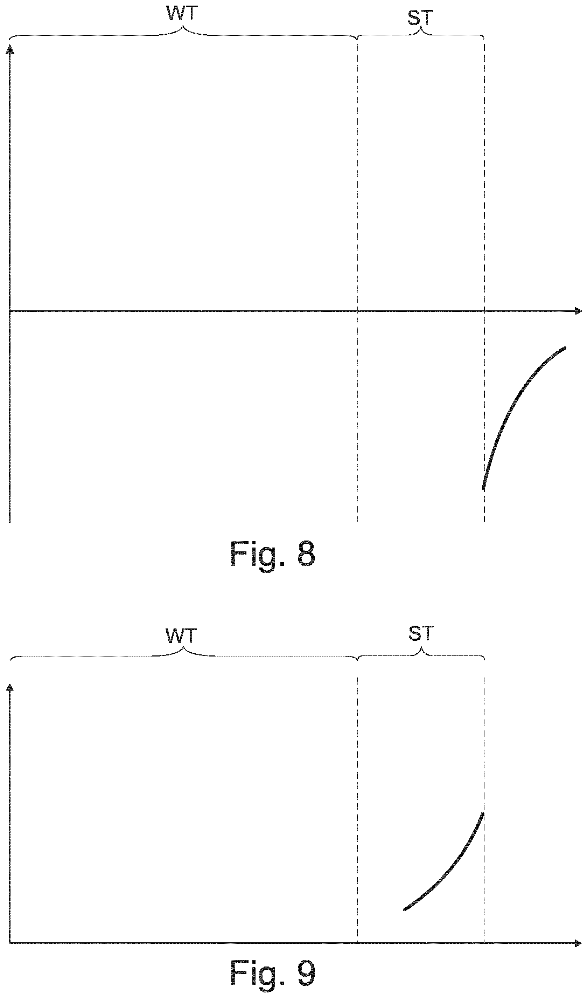

Figure 8 shows the current flow across the electric power source interface 24 during and after the second time span ST.

During the second time span ST, no current flow is observed across the electric power source interface 24. Right after the second time span ST, a negative current flow is observed across the electric power source interface 24. Thus, electric current flows back into the traction battery 14 connected to the electric power source interface 24. In other words, the traction battery 14 is charged right after the second time span ST.

This indicates that the second time span ST has ended too early in the sense that there was still considerable amount of capacitive energy stored in the snubber capacitor 46 at the end of the second time span ST. When the first pair of switches SW1, SW4 of the H-bridge 28 was opened after the second time span ST, the capacitive energy still stored in the snubber capacitor 46 charged the traction battery 14.

To avoid a charging of the traction battery 14 by capacitive energy stored in the snubber capacitor 46, the second time span ST is adapted based on the second data D2 (step S7). In the above-outlined scenario, the second time span ST is lengthened in order to reduce the amount of capacitive energy still stored in the snubber capacitor 46 at the end of the second time span ST.

Figure 9 shows an alternative scenario of the current flow across the electric power source interface during the second time span ST.

It can be observed that there is an increasing current flow out of the traction battery 14 into the converter unit 18 towards an end of the second time span ST.

This indicates that the second time span ST is too long, i.e. the first pair of switches of the H-bridge 28 is closed again for too long such that the snubber capacitor 46 has already been significantly depleted of its capacitive energy towards the end of the second time span ST. Consequently, electric current flows from the traction battery 14 to the electric machine 20 of the vehicle 10.

To avoid drainage of electric energy from the traction battery 14 during the second time span ST, the second time span ST is shortened (step S7).

It is noted that the method steps described above (steps S 1 to S7) may be executed in consecutive repetitive cycles. Thus, the switches SW1, SW2, SW3, SW4 of the H-bridge 28 may be actuated (steps S1 and S2) and the resulting first data D1 and second data D2 during the waiting time WT as well as during and after the second time span ST may be obtained (steps S4 and S6). Thereafter, the waiting time WT and/or the second time span ST may be optimized (steps S5 and S7) for the next cyclic execution of the steps S1 and S2. In other words, the optimization (step S3) takes effect for the next cyclic execution of the steps S 1 and S2. In this context, it is also possible to parallelize all or some of steps S4, S5, S6 and S7.

Alternatively, the waiting time WT and/or the second time span ST may be adapted in real time. This means that the method steps S4 to S7 may be executed in parallel to the method steps S 1 and S2. In other words, the optimization (step S3) takes effect in a same execution cycle as the cycle in which the first data D1 and second data D2 is obtained (steps S4 and S6).

In the above scenarios, the waiting time WT and the second time span ST have been described as adaptable and optimizable. In an alternative to the above scenarios, the waiting time WT and the second time span ST are fixed. Thus, they are not optimized during cycles of execution of the method for controlling a converter unit 18 for an electric machine 20 of a vehicle 10.

The fixed waiting time WT and the fixed second time span ST are based on an inductance of the converter unit 18 and on a capacitance of the snubber capacitor 46. The concept behind this is that the inductance of the converter unit 18 and the capacitance of the snubber capacitor 46 form an oscillating circuit, in other words, a resonant circuit.

A period duration $d_0$ of the oscillating circuit is defined by the formula $d_0 = 2\pi\sqrt{LC}$ . The fixed predefined waiting time WT is set to a quarter of the period duration $d_0$. After a lapse of a quarter of the period duration $d_0$, the snubber capacitor 46 is expected to be fully charged in the present example.

The fixed second time span ST is defined based on the capacitance of the snubber capacitor 46. A time period $t_H$ during which a capacitor has discharged half of its capacitive charge is generally defined by the formula $t_H = RC\ln(2)$, wherein R stands for the electric resistance of the resistor 30 in Ohms and C stands for the capacitance of the snubber capacitor 46 in Farad. The fixed second time span ST is set to two times the time period $t_H$, i.e. $2t_H$. Due to this, three quarters of capacitive energy stored in the snubber capacitor 46 at the end of the waiting time WT is discharged and may be used for powering the electric machine 20 of the vehicle 10.

As a general remark, the method steps S 1 to S7 have been explained in relation to the sixth step of the approximation of a sinusoidal voltage (see Figure 3) provided to the electric machine 20 of the vehicle 10. It is to be noted that the method steps S1 to S7 are executed for each step of the approximation of the sinusoidal voltage.

Moreover, the sinusoidal voltage of Figure 3 only refers to one phase of the electric machine 20 of the vehicle 10. It is understood that the steps S1 to S7 are also executed for any voltage steps of other phases of the electric machine 20 of the vehicle 10.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

LIST OF REFERENCE SIGNS

| | |
|---|---|
| 10 | vehicle |
| 12 | drive assembly |
| 14 | traction battery |
| 16 | electric power source |
| 18 | converter unit |
| 20 | electric machine |
| 22 | front road wheel |
| 24 | electric power source interface |
| 26 | electric machine interface |
| 28 | H-bridge |
| 30 | resistor |
| 32 | data processing apparatus |
| 34 | data storage unit |
| 36 | data processing unit |
| 38 | computer-readable storage medium |
| 40 | computer program |
| 42 | means for carrying out a method for controlling a converter unit for an electric machine of a vehicle |
| 44 | inductive charge |
| 46 | snubber capacitor |
| 47 | first sensing unit |
| 48 | voltmeter |
| 50 | maximum amount of capacitive energy |
| 51 | second sensing unit |
| 52 | shunt |

| | |
|---|---|
| D1 | first data |
| D2 | second data |
| FT | first time span |
| ST | second time span |
| SW1 | first switch |
| SW2 | second switch |
| SW3 | third switch |
| SW4 | fourth switch |
| WT | waiting time |

**Claims**

1. A method for controlling a converter unit (18) for an electric machine (20) of a vehicle (10), the converter unit (18) comprising an electric power source interface (24), an electric machine interface (26), at least one H-bridge (28) and at least one snubber capacitor (46), wherein the H-bridge (28) and the at least one snubber capacitor (46) are electrically interposed between the electric power source interface (24) and the electric machine interface (26) and wherein a switch (SW1, SW2, SW3, SW4) is provided on each leg of the H-bridge (28), the method comprising:

    - causing closure of a pair of switches (SW1, SW2, SW3, SW4) for supplying electric current to the electric machine interface (26) during a first predefined time span (FT) (S1), and
    - causing closure of the pair of switches (SW1, SW2, SW3, SW4) for supplying an electric induction current to the electric machine interface (26) during a second predefined time span (ST) and after a predefined waiting time (WT),

wherein the first predefined time span (FT) and the second predefined time span (ST) are associated with the same electric current supply half cycle (S2).

2. The method of claim 1, wherein the second time span (ST) and the waiting time (WT) are very small as compared to the first time span (FT).

3. The method according to any one of the preceding claims, wherein the second time span (ST) and/or the waiting time (WT) is fixed.

4. The method of claim 1 or 2, wherein the predefined waiting time (WT) and/or the second time span (ST) is based on an inductance of the converter unit (18) and on a capacitance of the at least one snubber capacitor (46).

5. The method according to any one of claims 1, 2 or 4, further comprising optimizing the second time span (ST) and/or the waiting time (WT) (S3).

6. The method according to any one of the preceding claims, wherein the method further comprises:

    - obtaining first data (D1) indicative of an amount of capacitive energy stored in the at least one snubber capacitor (46) (S4), and
    - adapting the waiting time (WT) and/or the second time span (ST) based on the first data (D1) (S5).

7. The method according to any of the preceding claims, further comprising:

    - obtaining second data (D2) indicative of an electric current at the electric power source interface (24) measured after the first time span (FT) (S6), and

    - adapting the waiting time (WT) and/or the second time span (ST) based on the second data (D2) (S7).

8. A data processing apparatus (32) comprising means (42) for carrying out the method of any one of the preceding claims.

9. A computer program (40) comprising instructions which, when the computer program (40) is executed by a computer, cause the computer to carry out the method of claims 1 to 7.

10. A computer-readable storage medium (38) comprising instructions which, when executed by a computer, cause the computer to carry out the method of claims 1 to 7.

11. A converter unit (18) for an electric machine (20) of a vehicle (10), the converter unit (18) comprising:

    - an electric power source interface (24) connectable to an electric power source (16),
    - an electric machine interface (26) connectable to an electric machine (20),
    - at least one H-bridge (28), wherein a switch (SW1, SW2, SW3, SW4) is provided on each leg of the H-bridge (28),
    - at least one snubber capacitor (46), and
    - a data processing apparatus (32) according to claim 8,

wherein the H-bridge (28) and the at least one snubber capacitor (46) are electrically interposed between the electric power source interface (24) and the electric machine interface (26), and wherein the data processing apparatus (32) is communicatively connected to the switches (SW1, SW2, SW3, SW4) of the H-bridge (28).

12. The converter unit (18) according to claim 11, further comprising a first sensing unit (47) for providing first data (D1) indicative of an amount of capacitive energy stored in the snubber capacitor (46).

13. The converter unit (18) according to claim 11 or 12, further comprising a second sensing unit (51) for providing second data (D2) indicative of an electric current at the electric power source interface (24).

14. A drive assembly (12) for a vehicle (10) comprising a converter unit (18) according to any one of claims 11 to 13 and an electric machine (20), wherein the electric machine (20) is electrically coupled to the electric machine interface (26) of the converter unit (18).

15. A vehicle (10) comprising a drive assembly (12) of

**EP 4 746 281 A1**

claim 14.

Fig. 1

Fig. 2

Fig. 3

Fig. 4

Fig. 5

Fig. 6

Fig. 7

Fig. 8

Fig. 9

Europäisches Patentamt
European Patent Office
Office européen des brevets

# EUROPEAN SEARCH REPORT

**Application Number**

EP 24 21 3412

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/408917 A1 (MILLER KENNETH [US] ET AL) 30 December 2021 (2021-12-30) * paragraph [0219] - paragraph [0250]; figures 16-27 * | 1-15 | INV. H02P6/08 H02M1/34 H02M7/5387 |
| A | US 2018/212537 A1 (FUKUTANI KAZUHIKO [JP]) 26 July 2018 (2018-07-26) * paragraph [0030] - paragraph [0117]; figures 2-4B * | 1-15 | ADD. H02P29/02 H02P101/45 |
| A | US 2009/201620 A1 (GRAY ASHLEY JAMES [NZ] ET AL) 13 August 2009 (2009-08-13) * paragraph [0291] - paragraph [0295]; figures 1A-1J * * paragraph [0267] - paragraph [0367] * * paragraph [1118] - paragraph [1143]; figures 18A-a8B * | 1-15 | |
| X | US 2016/028334 A1 (GREETHAM STEPHEN [GB] ET AL) 28 January 2016 (2016-01-28) * paragraph [0022] - paragraphs [0043], [0059]; figures 1-4 * | 1,8-11 | |
| X | US 2023/187926 A1 (FRAMPTON ISAAC S [US] ET AL) 15 June 2023 (2023-06-15) * paragraph [0179] - paragraph [0185]; figures 21,22A,22B,23 * | 1,8-11 | TECHNICAL FIELDS SEARCHED (IPC) H02M H02P |

The present search report has been drawn up for all claims

| Place of search | Date of completion of the search | Examiner |
|---|---|---|
| Munich | 4 April 2025 | Landi, Matteo |

EPO FORM 1503 03.82 (P04C01)

## ANNEX TO THE EUROPEAN SEARCH REPORT
## ON EUROPEAN PATENT APPLICATION NO.

EP 24 21 3412

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2025

| Patent document cited in search report | Publication date | Patent family member(s) | | Publication date |
|---|---|---|---|---|
| US 2021408917 A1 | 30-12-2021 | NONE | | |
| US 2018212537 A1 | 26-07-2018 | BR | 112017021481 A2 | 10-07-2018 |
| | | CN | 107852104 A | 27-03-2018 |
| | | EP | 3273589 A1 | 24-01-2018 |
| | | JP | 6341339 B2 | 13-06-2018 |
| | | JP | WO2017203828 A1 | 07-06-2018 |
| | | KR | 20180002608 A | 08-01-2018 |
| | | US | 2018212537 A1 | 26-07-2018 |
| | | WO | 2017203828 A1 | 30-11-2017 |
| US 2009201620 A1 | 13-08-2009 | GB | 2467551 A | 11-08-2010 |
| | | US | 2009201620 A1 | 13-08-2009 |
| US 2016028334 A1 | 28-01-2016 | CN | 105191113 A | 23-12-2015 |
| | | JP | 2016509464 A | 24-03-2016 |
| | | KR | 20150119421 A | 23-10-2015 |
| | | US | 2016028334 A1 | 28-01-2016 |
| | | WO | 2014135903 A2 | 12-09-2014 |
| US 2023187926 A1 | 15-06-2023 | CN | 110718902 A | 21-01-2020 |
| | | EP | 3595115 A1 | 15-01-2020 |
| | | US | 2020021103 A1 | 16-01-2020 |
| | | US | 2020343716 A1 | 29-10-2020 |
| | | US | 2023187926 A1 | 15-06-2023 |

EPO FORM P0459

For more details about this annex : see Official Journal of the European Patent Office, No. 12/82